# FASCICULE DE BREVET EUROPEEN

(11) **EP 4 400 275 B1**
(45) Date de publication et mention de la délivrance du brevet: **26.11.2025**
(21) Numéro de dépôt: 24178787.8
(22) Date de dépôt: 07.02.2020
(51) Int. Cl.: B42C 9/00, B42C 19/08, B42C 11/04, B42C 5/00, B26D 7/00, B42C 19/02, B65H 31/00, B65H 39/00, B25J 15/08, B42C 19/00, B25J 11/00, B42C 5/04, B42C 7/00

(54) **DISPOSITIF D'IMPRESSION ROBOTISÉE DE LIVRES PRODUITS A L'UNITÉ ET PROCÉDÉ ASSOCIÉ**
VORRICHTUNG ZUM ROBOTISCHEN DRUCKEN VON EINHEITENERZEUGTEN BÜCHERN UND VERFAHREN DAFÜR
DEVICE FOR THE ROBOTIC PRINTING OF BOOKS PRODUCED AS A UNIT AND ASSOCIATED METHOD

(30) Priorité: 06.03.2019 FR 1902286
(43) Date de publication de la demande: 17.07.2024
(62) Demande divisionnaire de: 20205537.2
(73) Titulaire: R&D Automation, 67700 Monswiller (FR)
(72) Inventeur: PEDURAND, Hubert, 89580 COULANGES LA VINEUSE (FR)
(74) Mandataire: IPAZ

(56) Documents cités:
- WO-A1-01/56794
- CN-A- 108 704 792
- CN-B- 105 817 392
- DE-A1- 102015 202 995
- DE-A1- 102016 218 042
- US-A- 3 160 315

## Description

### Domaine technique

La présente invention concerne un dispositif d'impression de livres. Elle concerne aussi un procédé d'impression de livres.

L'invention permet typiquement à un utilisateur d'imprimer à la demande un livre, de préférence en un exemplaire.

### État de la technique antérieure

On connaît des dispositifs de fabrication d'un livre à la demande, comme par exemple tel que décrit dans le document EP 1 196 296.

Toutefois, de tels dispositifs peuvent présenter certains problèmes.

Tout d'abord, après avoir imprimé un corpus et une couverture, le corpus et/ou la couverture peuvent parfois se bloquer dans le dispositif. Le mécanisme d'acheminement peut présenter au moins un des problèmes suivants :
- complexité de réalisation
- complexité d'entretien, notamment du bac de colle
- risque important de blocage du corpus ou de la couverture ou des deux.
- lenteur d'exécution du processus global.

En outre, un autre problème est que le collage du corpus à la couverture n'est pas toujours parfait et que ces deux éléments peuvent parfois ne pas très bien tenir ensemble.

DE 10 2016 218042 décrit un dispositif de maintien et de transport, un procédé de fonctionnement d'un dispositif de maintien et de transport, un système et procédé de production d'un document d'identification, de valeur ou de sécurité en forme de livre.

CN 108 704 792 décrit un dispositif de pulvérisation pour l'extrémité arrière d'un robot.

CN 105 817 392 décrit un dispositif de collage automatique.

Le document WO 01/56 794 A1 décrit un appareil de finition de livres de poche.

US 3 160 315 décrit un distributeur automatique de livres.

DE 10 2015 202995 décrit un système et procédé de production de documents d'identification en forme de livre et procédé de mise en place du système de production.

Le document WO99/38 707 décrit un appareil de reliure d'un livre.

Le but de la présente invention est de résoudre au moins un de ces problèmes susmentionnés.

### Exposé de l'invention

Cet objectif est atteint avec un dispositif de fabrication d'un livre à la demande selon la revendication 1.

Différentes caractéristiques avantageuses mais optionnelles sont listées dans les revendications dépendantes 2 à 12.

Suivant encore un autre aspect de l'invention, il est proposé un procédé de fabrication d'un livre à la demande selon la revendication 13.

### Description des figures et modes de réalisation

D'autres avantages et particularités de l'invention apparaîtront à la lecture de la description détaillée de mises en œuvre et de modes de réalisation nullement limitatifs, et des dessins annexés suivants illustrant un premier mode de réalisation préférentiel de dispositif 1 selon l'invention et différentes étapes d'un premier mode de réalisation préférentiel de procédé selon l'invention mis en œuvre par ce dispositif 1:
**[****Fig. 1****]** la figure 1 est une vue en perspective du dispositif 1,
**[****Fig. 2****]** la figure 2 est une vue en perspective du bras robotisé des moyens 7 et des moyens d'impression 2, 3 du dispositif 1 alors que la couverture 4 vient d'être imprimée,
**[****Fig. 3****]** la figure 3 est une vue en perspective du bras robotisé des moyens 7, du poste de rainage 21 et du poste de reliure 6 du dispositif 1 alors que la couverture 4 est dans sa position de rainage 11,
**[****Fig. 4****]** la figure 4 est une vue de coupe de profil des doigts 71 du bras robotisé des moyens 7, du poste de rainage 21 et du poste de reliure 6 du dispositif 1 alors que la couverture 4 est dans sa position de rainage 11,
**[****Fig. 5****]** la figure 5 est une vue en perspective du bras robotisé des moyens 7, du poste de rainage 21 et du poste de reliure 6 du dispositif 1 alors que la couverture 4 est dans sa position de dépôt 12,
**[****Fig. 6****]** la figure 6 est une vue de coupe de profil des doigts 71 du bras robotisé des moyens 7, du poste de rainage 21 et du poste de reliure 6 du dispositif 1 alors que la couverture 4 est dans sa position de dépôt 12,
**[****Fig. 7****]** la figure 7 est une vue en perspective du bras robotisé des moyens 7 manipulant un pistolet à colle 72, du poste de rainage 21 et du poste de reliure 6 du dispositif 1 alors que la couverture 4 est dans sa position de dépôt 12,
**[****Fig. 8****]** la figure 8 est une vue de coupe de profil des doigts 71 du bras robotisé des moyens 7, du poste de rainage 21 et du poste de reliure 6 du dispositif 1 alors que la couverture 4 est dans sa position de chauffe 13,
**[****Fig. 9****]** la figure 9 est une vue en perspective du bras robotisé des moyens 7 et du poste de grecquage 22 du dispositif 1 alors que le corpus 5 est inséré dans le poste de grecquage 22,
**[****Fig. 10****]** la figure 10 est une vue de coupe de profil des doigts 71 du bras robotisé des moyens 7 et du poste de grecquage 22 du dispositif 1 alors que le corpus 5 est inséré dans le poste de grecquage 22,
**[****Fig. 11****]** la figure 11 est une autre vue de coupe de profil (selon un plan perpendiculaire à celui de la figure 10) des doigts 71 du bras robotisé des moyens 7 et du poste de grecquage 22 du dispositif 1 alors que le corpus 5 est inséré dans le poste de grecquage 22,
**[****Fig. 12****]** la figure 12 est une vue en perspective du bras robotisé des moyens 7, du poste de rainage 21 et du poste de reliure 6 du dispositif 1 alors que la couverture 4 est dans sa position de chauffe 13 et que le corpus 5 est inséré dans le réceptacle 20 de corpus du poste de reliure 6,
**[****Fig. 13****]** la figure 13 est une vue de coupe de profil des doigts 71 du bras robotisé des moyens 7, du poste de rainage 21 et du poste de reliure 6 du dispositif 1 alors que la couverture 4 est dans sa position de pré-assemblage 14 et que le corpus 5 est inséré dans le réceptacle 20 de corpus du poste de reliure 6,
**[****Fig. 14****]** la figure 14 est une vue de coupe de profil du poste de rainage 21 et du poste de reliure 6 du dispositif 1 alors que la couverture 4 est dans sa position d'assemblage 15 et que le corpus 5 est inséré dans le réceptacle 20 de corpus du poste de reliure 6,
**[****Fig. 15****]** la figure 15 est une vue en perspective du bras robotisé des moyens 7, du poste de rainage 21 et du poste de reliure 6 du dispositif 1 alors que le livre 9, issu de l'assemblage de la couverture 4 et du corpus 5, est extrait du poste de reliure 6,
**[****Fig. 16****]** la figure 16 est une vue en perspective du bras robotisé des moyens 7 et du poste de grecquage 22 du dispositif 1 alors que le livre 9 est inséré dans le poste de grecquage 22,
**[****Fig. 17****]** la figure 17 est une vue en perspective du bras robotisé des moyens 7 et du poste de grecquage 22 du dispositif 1 alors que le livre 9 est inséré dans le poste de grecquage 22 et que le bras des moyens 7 change de prise sur le livre 9,
**[****Fig. 18****]** la figure 18 est une vue en perspective du bras robotisé des moyens 7 et du poste de massicotage 25 du dispositif 1 alors que le livre 9 est inséré dans le poste de massicotage 25 pour une première découpe,
**[****Fig. 19****]** la figure 19 est une vue de coupe de profil des doigts 71 du bras robotisé des moyens 7 et du poste de massicotage 25 du dispositif 1 alors que le livre 9 est inséré dans le poste de massicotage 25 pour une deuxième découpe,
**[****Fig. 20****]** la figure 20 une vue en perspective du bras robotisé des moyens 7 et de la sortie 27 du dispositif 1 alors que le livre 9 est inséré par le bras des moyens 7 dans la sortie 27 (pour alléger cette figure 20, le poste de reliure 6 n'y est pas représenté),
**[****Fig. 21****]** la figure 21 est un organigramme du premier mode de réalisation de procédé selon l'invention.

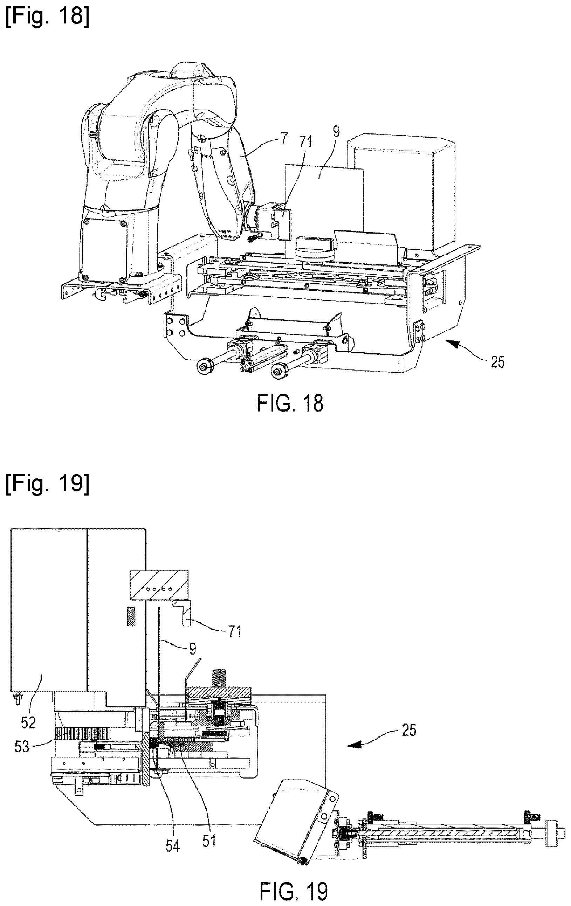

Ces dessins ne sont que schématiques et comprennent certaines simplifications. Par exemple :
- sur la plupart des figures, les doigts 71 du bras robotisé sont représentés écartés au lieu de maintenir pincé le corpus 5 ou la couverture 4 ou le livre 9,
- sur la plupart des figures, le corpus 5 ou la couverture 4 ou le livre 9 est illustré de manière schématique, par exemple par un trait fin sur la figure 19.

Ces modes de réalisation étant nullement limitatifs, on pourra notamment considérer des variantes de l'invention ne comprenant qu'une sélection de caractéristiques ou étapes décrites ou illustrées par la suite isolées des autres caractéristiques ou étapes décrites ou illustrées (même si cette sélection est isolée au sein d'une phrase comprenant ces autres caractéristiques ou étapes), si cette sélection de caractéristiques ou étapes est suffisante pour conférer un avantage technique ou pour différencier l'invention par rapport à l'état de la technique antérieure. Cette sélection comprend au moins une caractéristique ou étape de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

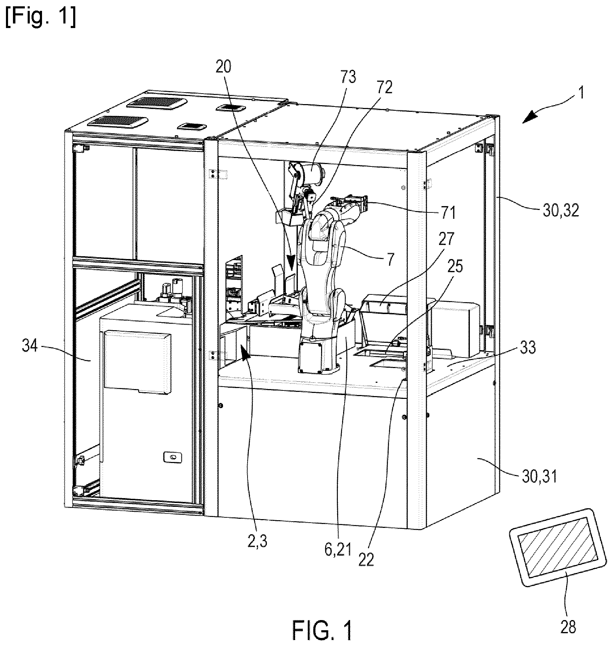

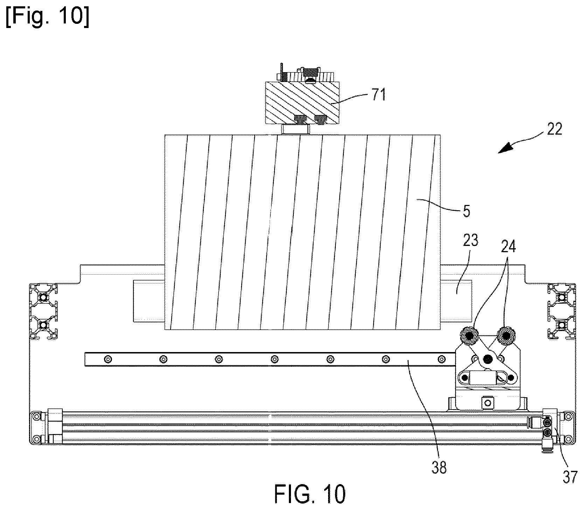

On va tout d'abord décrire, en référence aux figures 1 à 20, le premier mode de réalisation de dispositif 1 selon l'invention.

Le dispositif 1 est un dispositif de fabrication 1 d'un livre 9 à la demande.

Le dispositif 1 comprend des moyens de saisie 28 :
- connectés à un catalogue informatique de livres pouvant être imprimés et,
- agencés pour permettre une saisie, parmi le catalogue, du livre 9 à imprimer par le dispositif 1.

Les moyens de saisie 28 sont solidaires ou non du reste du dispositif 1. Ils peuvent être reliés par des moyens de communication sans fil (Wifi) ou avec fil au reste du dispositif 1. Les moyens de saisie 28 comprennent typiquement une tablette tactile ou un écran tactile.

Le dispositif 1 comprend un poste 2 d'impression et/ou de réception de couverture agencé pour respectivement imprimer et/ou recevoir une couverture 4.

Le poste 2 comprend une imprimante pour l'impression de la couverture 4.

Le poste 2 comprend en outre un bac d'alimentation agencé pour insérer, depuis l'extérieur du dispositif 1, une couverture 4 imprimée à l'extérieur du dispositif 1. Cela est utile notamment dans le cas d'une couverture 4 épaisse cartonnée.

Le dispositif 1 comprend un poste de rainage 21.

Le dispositif 1 comprend un poste 3 d'impression et/ou de réception de corpus agencé pour respectivement imprimer et/ou recevoir un corpus 5.

On entend par « corpus » un ensemble de plusieurs feuilles (de préférence de papier) empilées les unes sur les autres pour former les pages du livre 9.

Le poste 3 comprend une imprimante pour l'impression du corpus 5.

Le poste 3 comprend en outre un bac d'alimentation agencé pour insérer, depuis l'extérieur du dispositif 1, un corpus 5 imprimé à l'extérieur du dispositif 1. Cela est utile notamment dans le cas d'un corpus 5 sur un papier ou matériau spécial ou avec des encres spéciales (dorures, etc.).

Le poste 2 d'impression ou de réception de couverture et le poste 3 d'impression ou de réception de corpus comprennent une imprimante commune à ces deux postes. Les postes 2 et 3 comprennent typiquement une imprimante de référence LEXMARK CS923 ou équivalente.

Le dispositif 1 comprend un poste de grecquage 22.

Le poste de grecquage 22 comprend un réceptacle de corpus 23 (agencé pour recevoir et immobiliser le corpus 5) et des moyens 24 pour grecquer une bordure du corpus 5 lorsqu'il est disposé dans le réceptacle 23 de corpus du poste de grecquage 22.

Le dispositif 1 comprend un poste de reliure 6 agencé pour assembler le corpus 5 et la couverture 4.

Le dispositif 1 comprend un poste de massicotage 25 agencé pour massicoter le livre 9.

Le dispositif 1 comprend un poste de sortie 27 agencé pour faire sortir le livre 9 en dehors du dispositif 1, pour une distribution du livre 9 à l'utilisateur.

Le dispositif 1 comprend des moyens d'acheminement 7 agencés et/ou programmés pour acheminer, la couverture 4 seule, le corpus 5 seul, et le livre 9 issu de l'assemblage de la couverture 4 et du corpus 5, entre les différents postes 2, 3, 6, 21, 22, 25, 27.

Notamment, les moyens d'acheminement 7 sont agencés et/ou programmés pour acheminer la couverture 4 seule (sans le corpus 5) :
- du poste d'impression ou de réception de couverture 2 jusqu'au poste de rainage 21 (de préférence sans passer par un des autres postes), et/ou
- du poste d'impression ou de réception de couverture 2 jusqu'au poste de reliure 6 (de préférence sans passer par un des autres postes) , et/ou
- du poste de rainage 21 jusqu'au poste de reliure 6 (de préférence sans passer par un des autres postes) , et/ou
- du poste d'impression ou de réception de couverture 2 ou du poste de reliure 6 ou du poste de rainage 21 jusqu'au poste de sortie 27 (de préférence sans passer par un des autres postes).

Notamment, les moyens d'acheminement 7 sont agencés et/ou programmés pour acheminer le corpus 5 seul (sans la couverture 4) :
- du poste d'impression ou de réception de corpus 3 jusqu'au poste de reliure 6 (de préférence sans passer par un des autres postes)ou jusqu'au poste de grecquage 22 (de préférence sans passer par un des autres postes) ou jusqu'au poste de massicotage 25 (de préférence sans passer par un des autres postes) , et/ou
- du poste de grecquage 22 jusqu'au poste de reliure 6 (de préférence sans passer par un des autres postes) ou jusqu'au poste de massicotage 25 (de préférence sans passer par un des autres postes) , et/ou
- du poste de massicotage 25 jusqu'au poste de grecquage 22 (de préférence sans passer par un des autres postes) ou jusqu'au poste de reliure 6 (de préférence sans passer par un des autres postes) , et/ou
- du poste d'impression ou de réception de corpus 3 ou du poste de reliure 6 ou du poste de grecquage 22 ou du poste de massicotage 25 jusqu'au poste de sortie 27 (de préférence sans passer par un des autres postes).

Notamment, les moyens d'acheminement 7 sont agencés et/ou programmés pour acheminer le livre 9 (issu de l'assemblage de la couverture 4 et du corpus 5) :
- du poste de reliure 6 jusqu'au poste de grecquage 22 (de préférence sans passer par un des autres postes) ou jusqu'au poste de massicotage 25 (de préférence sans passer par un des autres postes) , et/ou
- du poste de grecquage 22 jusqu'au poste de massicotage 25 (de préférence sans passer par un des autres postes) , et/ou
- du poste de massicotage 25 jusqu'au poste de grecquage 22 (de préférence sans passer par un des autres postes) , et/ou
- du poste de reliure 6, de grecquage 22 ou de massicotage 25 jusqu'au poste de sortie 27 (de préférence sans passer par un des autres postes).

Comme nous le verrons par la suite, ledit dispositif 1 est agencé pour déposer de la colle sur une zone de collage 8 au verso de la couverture à l'intérieur du poste de reliure 6 avant un assemblage ou emboitage par collage de la couverture 4 sur le corpus 5 formant un livre 9.

Les moyens d'acheminement comprennent (de préférence consistent en) une unité de commande COMM décrite par la suite et un bras robotisé muni de doigts 71 (au minimum deux doigts 71 formant une pince) agencés et/ou programmés (notamment par l'unité de commande COMM) pour manipuler la couverture 4 et/ou le corpus 5.

Ce bras des moyens 7 est typiquement un bras robotisé à au moins six axes de rotation, par exemple de référence COMAU Racer 5 ou équivalent.

Les moyens d'acheminement 7 sont agencés et/ou programmés pour acheminer le corpus 5 depuis le poste 3 d'impression ou de réception de corpus et jusqu'au poste de grecquage 22 (éventuellement en passant par le poste de massicotage 25) de manière à grecquer un côté du corpus 5 alors que le corpus 58 s'étend verticalement ou sensiblement (i.e. à plus ou moins 20°) verticalement dans le poste 22.

Le poste de massicotage 25 est relié à un bac de récupération 26, les moyens d'acheminement 7 étant agencés et/ou programmés pour acheminer le corpus 5 dans un format initial, de préférence A4 de la norme internationale ISO 216 (ICS no 85.080.10) (i.e. ayant une dimension de 210 × 297 mm), jusqu'au poste de massicotage 25, puis maintenir le corpus 5 dans le poste de massicotage 25 (alors que le corpus 5 s'étend verticalement ou sensiblement (i.e. à plus ou moins 20°) verticalement dans le poste 25) pour une découpe en une partie du corpus 5 maintenue dans les moyens d'acheminement 7 et une autre partie du corpus 5 découpée et dirigée vers le bac de récupération 26, puis assembler dans le bac de récupération 26 les deux parties du corpus 5 de manière à former dans les moyens d'acheminement 7 un corpus 5 de format réduit, de préférence A5 de la norme internationale ISO 216 (ICS no 85.080.10) (i.e. ayant une dimension de 210 × 148 mm), mais d'épaisseur augmentée par rapport à son format initial. Ces moyens 25 sont mis en œuvre de manière optionnelle lorsque le livre 9 est de format réduit par rapport à l'impression par les moyens 3.

Le poste de grecquage 22 comprend un ou deux rouleaux dentées 24 agencé pour grecquer (c'est-à-dire entailler) le corpus 5. Un vérin 37 est agencé pour déplacer en translation chaque rouleau 24 le long du corpus 5 maintenu dans le réceptacle 23. Un rail 38 de guidage est agencé pour guider chaque rouleau dans ce mouvement de translation. Un autre vérin ou serre flanc 39 est agencé pour maintenir en position le corpus 5 dans le réceptacle 23 pendant le grecquage.

Selon la variante considérée :
- les moyens d'acheminement 7 sont agencés et/ou programmés pour acheminer le corpus 5 depuis le poste 3 d'impression ou de réception de corpus et jusqu'au poste de reliure 6 en mesurant une épaisseur du corpus 5, par exemple par mesure de l'écart entre les deux doigts 71 de la pince du bras des moyens 7 tenant le corpus 5. Cela est par exemple le cas si le corpus 5 est déjà dans le réceptacle 20 avant le dépôt de colle sur la couverture 4 ; et/ou
- le dispositif 1 est agencé et/ou programmé pour mesurer une épaisseur du corpus 5, par exemple par mesure en sortie du poste d'impression 3 (par une mesure optique ou mécanique, éventuellement avec un facteur multiplicatif x2 en cas de future découpe dans le bac de récupération 26). Cela est par exemple le cas si le corpus 5 n'a pas encore été manipulé par les moyens 7 avant le dépôt de colle sur la couverture 4 ; et/ou
- le dispositif 1 est agencé et/ou programmé pour déterminer une épaisseur du corpus 5 à partir d'une base de données et en fonction du livre 9 sélectionné par l'utilisateur, typiquement selon des métadonnées collectées dans un fichier PDF correspondant au corpus. Cela est par exemple le cas si le corpus 5 n'a pas encore été fini d'imprimé avant le dépôt de colle sur la couverture 4.

Le poste de reliure 6 comprend un réceptacle de corpus 20 agencé pour recevoir le corpus 5 dans une position de réception 16, dans laquelle le corpus 5 s'étend de préférence verticalement ou sensiblement (i.e. à plus ou moins 20°) verticalement.

Les moyens d'acheminement 7 sont agencés et/ou programmés pour acheminer le corpus 5 du poste de grecquage 22 jusqu'au poste de reliure 6 (plus exactement jusqu'au réceptacle 20).

Les moyens d'acheminement 7 sont agencés et/ou programmés pour acheminer la couverture 4 du poste d'impression 2 jusqu'au poste de rainage 21.

Les moyens d'acheminement 7 sont agencés et/ou programmés pour insérer la couverture dans le poste de rainage dans une position de rainage 11, dans laquelle la couverture 4 s'étend de préférence verticalement ou sensiblement (i.e. à plus ou moins 20°) verticalement.

Le poste de rainage 21 est agencé pour effectuer un pré-pliage de la couverture ou rainer la couverture 4 (avant tout dépôt de colle sur la couverture 4) selon plusieurs lignes parallèles de pliage s'étendant sur toute une largeur ou longueur de la couverture 4 (de préférence au dos de la couverture), de préférence selon deux ou quatre lignes parallèles de pliage. Au moins deux de ces lignes de plis parallèles sont dans la zone de collage 8.

Le poste de rainage 21 comprend, selon la variante considérée :
- une lame 41, une butée 42, et un vérin 43 agencé pour déplacer la lame 41 de manière à coincer la couverture 4 entre la lame 41 et la butée 42 de manière à réaliser un ligne de pliage dans la couverture 4 le long de la lame 41. Dans ce cas la couverture 4 se décale dans le poste pour chaque ligne de pliage à réaliser ;
- plusieurs lames 41, une butée 42, et un vérin 43 agencé pour déplacer les lames 41 de manière à coincer la couverture 4 entre les lames 41 et la butée 42 de manière à réaliser simultanément plusieurs (typiquement deux ou quatre) lignes de pliage parallèles dans la couverture 4 le long des lames 41. Dans ce cas la couverture 4 n'explore qu'une seule position de rainage 11.

Les moyens d'acheminement 7 sont agencés et/ou programmés pour acheminer la couverture 4 du poste de rainage 21 jusqu'au poste de reliure 6.

Le poste de reliure 6 comprend des moyens de chauffage 10 agencés pour réchauffer et/ou maintenir à chaud de la colle déposée sur la zone de collage 8 de la couverture 4 avant l'assemblage ou l'emboitage par collage de la couverture 4 et du corpus 5.

Les moyens d'acheminement 7 sont agencés et/ou programmés pour positionner la couverture 4 selon plusieurs positions dans le poste de reliure 6, successivement dans cet ordre :
- position de dépôt 12, dans laquelle la couverture 4 s'étend de préférence horizontalement ou sensiblement (i.e. à plus ou moins 20°) horizontalement, puis
- position de chauffe 13, dans laquelle la couverture 4 s'étend de préférence horizontalement ou sensiblement (i.e. à plus ou moins 20°) horizontalement, puis
- position de pré-assemblage 14, dans laquelle la couverture 4 s'étend de préférence horizontalement ou sensiblement (i.e. à plus ou moins 20°) horizontalement, puis
- position d'assemblage 15, dans laquelle la couverture 4 s'étend de préférence horizontalement ou sensiblement (i.e. à plus ou moins 20°) horizontalement.

Les moyens d'acheminement 7 sont agencés et/ou programmés pour positionner la couverture 4 selon la position de dépôt 12 pour laquelle la zone de collage 8 n'est pas située sous les moyens de chauffage 10 et pour laquelle le dispositif 1 est agencé pour déposer la colle sur la zone de collage 8. Dans cette position 12 les moyens de chauffage 10 sont inactifs.

Dans cette position de dépôt 12, la couverture 4 repose sur une surface de support horizontale ou sensiblement horizontale (à plus ou moins 20°) du poste de reliure 6.

Le poste de reliure 6 comprend des moyens de verrouillage 18 agencés pour immobiliser la couverture 4 dans la position de dépôt 12.

Le dispositif 1 comprend un pistolet de colle 72.

Le bras robotisé des moyens 7 est agencé et/ou programmé pour saisir le pistolet de colle 72 pour déposer de la colle sur la zone de collage 8 de la couverture 4 alors que la couverture 4 est placée à plat dans le poste de reliure 6 dans sa position de dépôt 12.

Le pistolet de colle 72 comprend :
- une réserve 73 de colle comprenant un fil de colle solide enroulé sous la forme d'une bobine,
- des moyens pour dérouler le fil de la bobine par une extrémité de ce fil et pour faire fondre cette extrémité du fil de colle de manière à délivrer la colle sous forme liquide ou pâteuse sur la zone de collage 8 ; ces moyens comprennent typiquement un système de déroulement et un fondoir. Le système de déroulement comprend un galet libre en rotation et une roue dentée entrainée en rotation par un moteur, le galet et la roue dentée pinçant le fil de colle entre la bobine et le fondoir. Le système de déroulement est agencé pour tirer le fil en provenance de la bobine et le pousser vers le fondoir de manière à enfiler le fil de colle dans le fondoir. Le fondoir est chauffé et régulé en température. Le fondoir est agencé pour faire fondre de fil de colle. Le fondoir comprend une masse (typiquement d'un alliage de cuivre type étain ou autre) en forme d'entonnoir et chauffé, le diamètre de sortie de cet entonnoir (environ 1mm) étant inférieur au diamètre du fil de colle à l'état solide sur sa bobine.

La colle est par exemple de la colle PLANATOL Planamelt W ou équivalente, achetée sous forme de granulés et extrudée sous la forme d'un fil entouré sous la forme de la bobine 73.

Le dispositif 1, plus exactement le bras des moyens 7, est agencé et/ou programmé pour déposer (et éventuellement déterminer au préalable) une quantité de colle sur la zone de collage 8 de la couverture 4 à l'intérieur du poste de reliure 6, cette quantité de colle étant une fonction de l'épaisseur mesurée ou déterminée du corpus 5, typiquement selon les métadonnées collectées dans un fichier PDF correspondant au corpus traduites en dépose de colle.

Les moyens d'acheminement 7 sont agencés et/ou programmés pour positionner la couverture 4 selon la position de chauffe 13 pour laquelle la zone de collage 8 est située sous les moyens de chauffage 10, de sorte que la colle déposée soit située entre la couverture 4 et les moyens de chauffage 10. Les moyens de chauffage 10 comprennent :
- des moyens 201 pour générer de la chaleur ; ces moyens 201 comprennent typiquement des moyens pour générer un courant d'air chaud et/ou des moyens pour générer un rayonnement de chaleur, par exemple ils comprennent une lampe infrarouge ou une résistance chauffante ; ces moyens 201 sont typiquement agencés pour générer une température supérieure à 100 °C (ou même 150 °C) et/ou inférieure à 300 °C au niveau de la zone 8 lorsque la couverture 4 est dans sa position de chauffe 13; ces moyens 201 sont typiquement agencés pour être à une distance supérieure à 10 mm et/ou inférieure à 50 mm de la zone 8 lorsque la couverture 4 est dans sa position de chauffe 13 ; ces moyens 201 comprennent typiquement une résistance chauffante disposée à une distance de 30 mm de la zone 8 lorsque la couverture 4 est dans sa position de chauffe 13 et dont la température est légèrement supérieure à 170°C de manière à chauffer la zone 8 légèrement distance à 170°C lorsque la couverture 4 est dans sa position de chauffe 13 ;
- un bec 202 (typiquement en inox ou idéalement dans un matériau thermiquement isolant tel du mica) agencé pour limiter une étendue de diffusion de cette chaleur en direction de la zone de collage 8 dans la position de chauffe 13 de la couverture 4,
- un régulateur (comprenant l'unité de commande COMM) agencé et/ou programmé pour régler une ouverture du bec 202 (le bec 202 comprenant deux volets) en fonction d'une quantité et/ou d'une largeur de colle déposée sur la zone de collage 8 et/ou en fonction d'une épaisseur du corpus 5. On peut se passer de ce régulateur notamment si la chaleur générée par les moyens 201 n'est pas trop importante.

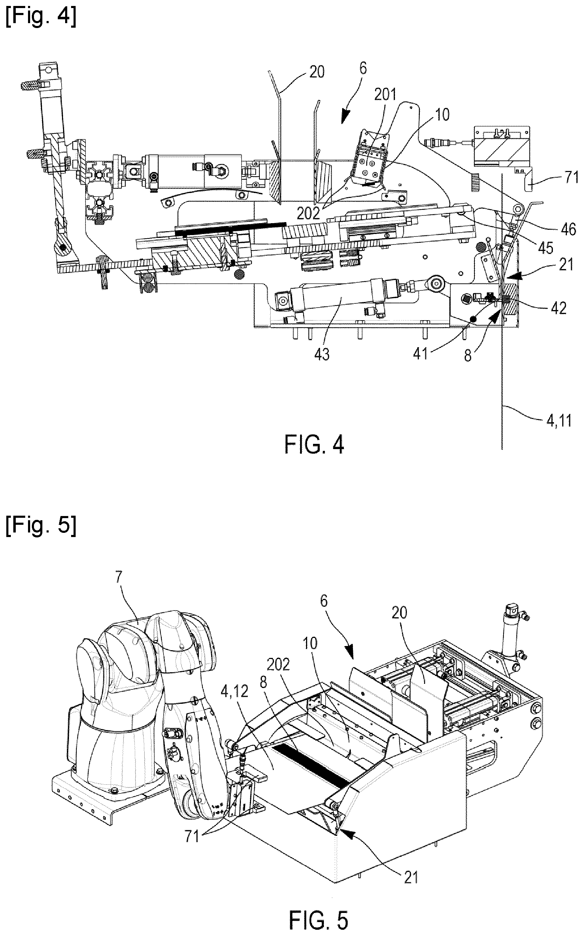

On remarque sur les figures 4, 6, 8, 13 et 14 une disposition particulière des moyens 10 (plus précisément de chacun des moyens 201 et 202).

Les moyens 10 (plus précisément chacun des moyens 201 et 202) sont situés au-dessus de la couverture 4 pour la position de dépôt 12 de la couverture 4.

Les moyens 10 (plus précisément chacun des moyens 201 et 202) sont situés au-dessus de la couverture 4 pour la position de chauffage 13 de la couverture 4.

Les moyens 10 (plus précisément chacun des moyens 201 et 202) sont situés au-dessus de la zone de collage 8 pour la position de chauffage 13 de la couverture 4.

Le dispositif 1 (plus exactement les moyens 7) est donc agencé pour déposer de la colle sur la couverture 4 de sorte que cette colle déposée soit située entre :
- d'un côté, la couverture 4 dans sa position de dépôt 12 ou la couverture 4 dans sa position de chauffage 13 ou la zone de collage 8 pour la position de chauffage 13 de la couverture 4, et
- de l'autre côté, les moyens 10 (plus précisément chacun des moyens 201 et 202).

Autrement dit, la position de dépôt 12 ou la position de chauffage 13 ou la zone de collage 8 pour la position de chauffage 13 de la couverture 4 est située entre :
- d'un côté la surface ou plaque de support pour la position de dépôt 12, ou de chauffe 13, et
- de l'autre côté les moyens 10 (plus précisément chacun des moyens 201 et 202).

Ainsi, on chauffe la colle non pas à travers la couverture 4, mais directement au-dessus de la couverture 4 de sorte que de la chaleur en provenance des moyens 10 (plus exactement des moyens 201) atteigne la colle déposée sur la couverture par les moyens 7 sans traverser au préalable la couverture 4. On évite ainsi de détériorer ou brûler la couverture 4. On maximise ainsi la quantité de chaleur reçue par la colle par rapport à la quantité de chaleur reçue par la couverture 4.

Dans la position de chauffage 13, la zone de collage 8 se trouve, parmi les deux faces de la couverture 4, sur la face de la couverture orientée vers les moyens 10 (plus précisément vers chacun des moyens 201 et 202).

Les moyens de verrouillage 18 sont agencés pour immobiliser la couverture 4 dans la position de chauffe 13.

Les moyens de verrouillage 18 comprennent le bec 202 des moyens de chauffage 10 qui sont montés de manière amovible entre deux positions dont une position pour laquelle la couverture 4 n'est pas immobilisée par le bec 202 et une position pour laquelle la couverture 4 est immobilisée par le bec 202.

Les moyens d'acheminement 7 sont agencés et/ou programmés pour positionner la couverture 4 selon la position de pré-assemblage 14 pour laquelle la zone de collage 8 n'est pas située sous les moyens de chauffage 10.

La position de chauffe 13 est décalée par rapport à la position de dépôt 12 selon une direction de décalage 17, de préférence horizontale ou sensiblement (i.e. à plus ou moins 20°) horizontale.

La position de dépôt 12 est décalée par rapport à la position de rainage 11 au moins selon la direction de décalage 17.

Plus exactement, la position de dépôt 12 est décalée par rapport à la position de rainage 11 selon la direction de décalage 17 et selon un angle de préférence de 90° ou sensiblement égal à 90° (i.e. à plus ou moins 20°).

Autrement dit, la position de dépôt 12 est décalée par rapport à la position de rainage 11 par :
- une translation de la couverture 4 (par les moyens 7) selon la direction de décalage 17, et
- une rotation de la couverture 4 (par les moyens 7) de sorte que dans sa position de rainage 11, la couverture 4 s'étend perpendiculairement ou sensiblement perpendiculairement (i.e. à plus ou moins 20°) à la couverture 4 dans sa position de dépôt 12.

L'espace occupé par la couverture 4 dans sa position de rainage 11 intersecte l'espace occupé par la couverture 4 dans sa position de dépôt 12.

Dans sa position de rainage 11, la couverture 4 s'étend perpendiculairement ou sensiblement perpendiculairement (i.e. à plus ou moins 20°) à la couverture 4 dans sa position de dépôt 12.

La position de pré-assemblage 14 est décalée par rapport à la position de chauffe 13 selon cette direction de décalage 17.

La couverture 4 est située dans un même plan dit plan de collage 19 (de préférence horizontal ou sensiblement (i.e. à plus ou moins 20°) horizontal)) pour ces positions de dépôt 12, de chauffe 13 et de de pré-assemblage 14.

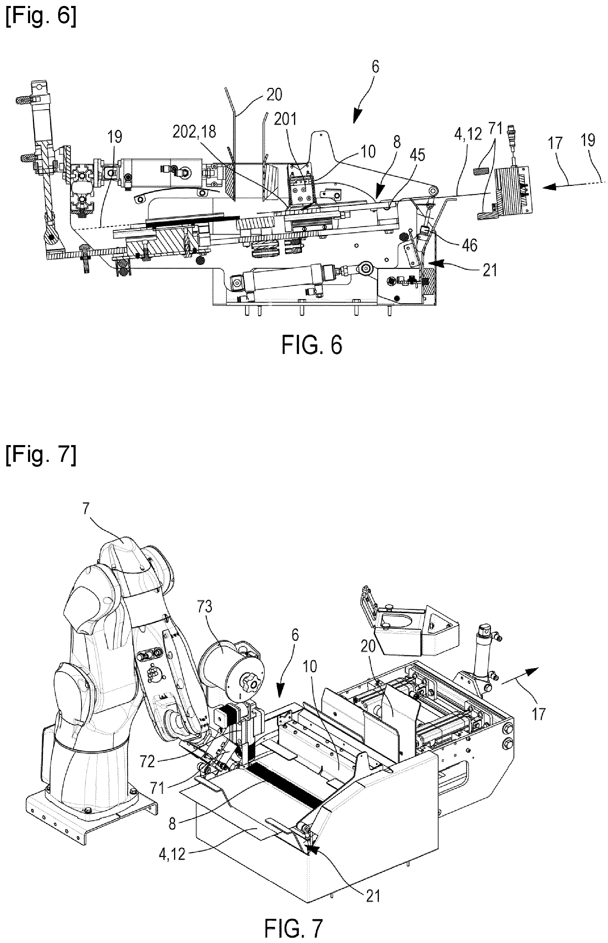

Le poste de reliure 6 est agencé et/ou programmé pour positionner la couverture 4 selon la position d'assemblage 15. Pour cela, le poste de reliure 6 comprend une liaison pivot 45 (illustrée par le passage entre les figures 4 et 6) agencée pour faire basculer la surface de support de la couverture 4 entre ses positions 14 et 15. Cette liaison pivot 45 est actionnée par un vérin 46.

La position d'assemblage 15 est décalée par rapport à la position de pré-assemblage 14 au moins en partie perpendiculairement (de préférence de manière oblique) à la direction de décalage 17 et au plan de collage 19 de manière à pouvoir assembler la couverture 4 et le corpus 5 par collage par l'intermédiaire de la zone de collage 8 sur laquelle la colle a été déposée.

Les moyens d'acheminement 7 sont agencés et/ou programmés pour que dans la position de dépôt 12 la zone de collage 8 ne soit pas située sous le réceptacle de corpus 20 du poste de reliure 6.

Les moyens d'acheminement 7 sont agencés et/ou programmés pour que dans la position de pré-assemblage 14 la zone de collage 8 soit située sous le réceptacle 20 de corpus du poste de reliure 6.

Dans sa position de réception 16 le corpus 5 s'étend perpendiculairement ou sensiblement (i.e. à plus ou moins 20°) perpendiculairement à la couverture 4 dans sa position de pré-assemblage 14 et dans sa position d'assemblage 15.

Les moyens d'acheminement 7 sont agencés et/ou programmés pour sortir le livre 9 du poste de reliure 6 perpendiculairement ou sensiblement (i.e. à plus ou moins 20°) perpendiculairement à la direction de décalage 17 (et parallèlement ou sensiblement (i.e. à plus ou moins 20°) parallèlement au plan de collage 19) et en ne touchant que le corpus 5, c'est-à-dire en tenant le livre par la « gouttière ».

Les moyens d'acheminement 7 sont agencés et/ou programmés :
- pour acheminer le livre assemblé 9 depuis le poste de reliure 6 et jusqu'au réceptacle 23 de corpus du poste de grecquage 22 en ne touchant que le corpus 5,
- puis pour lâcher le livre 9 dans le réceptacle 23 de corpus du poste de grecquage 22, alors que le livre 9 s'étend verticalement ou sensiblement (i.e. à plus ou moins 20°) verticalement
- puis pour changer de prise en saisissant le livre 9 par au moins une partie de la couverture 4 collée au corpus 5.

Les moyens d'acheminement 7 sont agencés et/ou programmés pour acheminer le livre 9 depuis le poste de grecquage 22 et jusqu'au poste de massicotage 25.

Le poste de massicotage 25 est agencé pour découper le livre 9 selon trois lignes de découpe correspondant à trois bords du livre 9, le quatrième bord du livre 9 correspondant au bord de collage du corpus 5 à la couverture 4 par la zone de collage 8. Chaque ligne de découpe est faite alors que le livre 9 s'étend verticalement ou sensiblement (i.e. à plus ou moins 20°) verticalement dans le poste 25.

Le poste de massicotage 25 comprend une lame 51, une butée 54, un moteur 52 agencé pour actionner la lame 51 contre la butée 54 (par l'intermédiaire d'engrenages 53) de manière à coincer le livre 9 (ou le corpus 5 en cas de découpe pour passer du A4 au A5) entre la butée 54 et la lame 51 et ainsi couper un bord du livre 9.

Le dispositif 1 comprend un coffrage 30 renfermant l'ensemble des postes. Le coffrage 30 comprend :
- une partie inférieure 31 entièrement opaque (par opaque, on entend à travers laquelle un œil humain ne peut pas voir et/ou qui laisse passer moins de 1% de l'intensité lumineuse de chaque longueur d'onde comprise entre 400 et 700 nm),
- une partie supérieure 32 munie d'une vitrine transparente et située au-dessus de la partie inférieure 31 (par transparente, on entend à travers laquelle un œil humain peut voir et/ou qui laisse passer au moins 50% de l'intensité lumineuse d'au moins une longueur d'onde comprise entre 400 et 700 nm),
- une partie latérale 34 (de préférence entièrement opaque) jouxtant latéralement la partie inférieure 31 et la partie supérieure 32.

Le dispositif 1 comprend une unité de commande COMM (non illustrée), de préférence située dans la partie latérale 34.

Cette unité de commande comprend au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Cette unité de commande est agencée pour :
- communiquer avec les moyens de saisie 28, notamment pour recevoir l'indication du livre 9 à imprimer sélectionnée sur les moyens de saisie 28 par l'utilisateur, et
- pour commander les moyens 7 et chacun des postes 2, 3, 6, 21, 22, 25 pour mettre en œuvre le procédé selon l'invention décrit par la suite de manière à fabriquer ce livre 9, notamment pour imprimer le corpus 5 et la couverture 4 correspondant à ce livre 9.

La partie inférieure 31 et la partie supérieure 32 sont séparées par une plaque de séparation 33 opaque (mais munie de trous de passage ou fentes).

La plaque 33 est horizontale ou sensiblement (i.e. à plus ou moins 20°) horizontale.

Le bras robotisé des moyens 7 est situé au moins en partie dans la partie supérieure 32.

Le poste de reliure 6 est situé au moins en partie dans la partie supérieure 32.

Le poste de rainage 21 est situé au moins en partie dans la partie supérieure 32.

Le poste de grecquage 22 est situé au moins en partie dans la partie inférieure 31 et est accessible à partir de la partie supérieure 32 par le corpus 5 ou le livre 9 manipulé par le bras des moyens 7 à travers une fente réalisée dans la plaque 33 de séparation.

Le poste de massicotage 25 est situé au moins en partie dans la partie inférieure 31 et est accessible à partir de la partie supérieure 32 par le corpus 5 ou le livre 9 manipulé par le bras des moyens 7 à travers une fente réalisée dans la plaque de séparation 33.

Le poste 3 d'impression ou de réception de corpus est situé au moins en partie dans la partie supérieure 32 et/ou dans la partie latérale 34.

Le poste 2 d'impression ou de réception de couverture est situé au moins en partie dans la partie supérieure 32 et/ou dans la partie latérale 34.

Le poste de sortie 27 (comprenant typiquement une simple trappe) est situé au moins en partie dans la partie supérieure 32.

On va maintenant décrire, en référence aux figures 1 à 21, le premier mode de réalisation de procédé selon l'invention mis en œuvre dans le dispositif 1 selon l'invention.

Ce mode de réalisation étant nullement limitatif, on pourra notamment considérer des variantes ne comprenant qu'une sélection d'étapes décrites ou illustrées par la suite et/ou pour chacune de ces étapes une sélection des caractéristiques de ces étapes décrites ou illustrées par la suite (même si cette sélection est isolée au sein d'une phrase comprenant ces autres caractéristiques ou étapes), si cette sélection de caractéristiques ou étapes est suffisante pour conférer un avantage technique ou pour différencier l'invention par rapport à l'état de la technique antérieure.

Ce mode de réalisation de procédé selon l'invention comprend les étapes 99 à 135 décrites par la suite.

Les étapes 101 à 114 se succèdent dans le temps par numéros croissants.

Les étapes 100 et 115 à 119 se succèdent dans le temps par numéros croissants.

Les étapes 121 à 135 se succèdent dans le temps par numéros croissants.

Chacune des étapes 121 à 135 est mise en œuvre après le bloc des étapes 100 et 115 à 119 et après le bloc des étapes 101 à 114.

Dans ce mode de réalisation, les étapes 101 à 135 se succèdent dans le temps par numéros croissants.

L'étape 100 est mise en œuvre :
- avant l'étape 115, et
- avant et/ou après et/ou pendant l'étape 101, de préférence entre et/ou pendant les étapes 102 à 114, de préférence entre et/ou pendant les étapes 102 à 109.

Au cours ou entre ces différentes étapes, ce mode de réalisation de procédé selon l'invention comprend un acheminement, par les moyens d'acheminement 7, de la couverture 4 et/ou du corpus 5 entre les différents postes 2, 3, 6, 21, 22, 25, 27. Les moyens d'acheminement 7 comprennent le bras robotisé des moyens 7 muni de doigts 71 manipulant la couverture 4 et/ou le corpus 5 pour l'acheminer entre les différents postes 2, 3, 6, 21, 22, 25, 27.

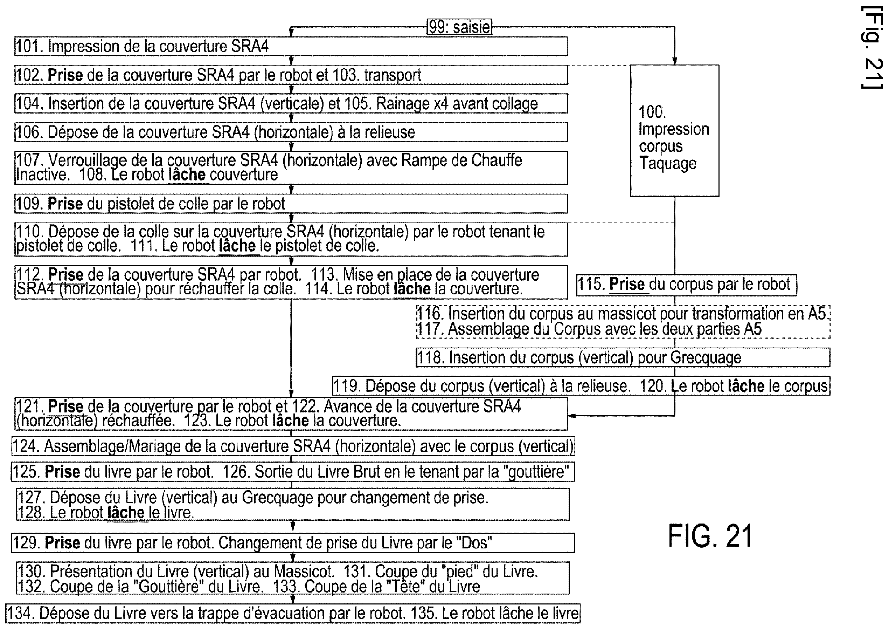

Ces moyens 7 sont aussi appelés « robot », notamment sur la figure 21.

Ce mode de réalisation de procédé selon l'invention de fabrication d'un livre 9 à la demande comprend initialement l'étape 99 de saisie par l'utilisateur, sur les moyens de saisie 28, du livre 9 à imprimer.

Après l'étape 99, ce mode de réalisation de procédé selon l'invention comprend l'étape 100 d'impression ou de réception, respectivement au poste 3 d'impression ou de réception de corpus, du corpus 5. En cas d'impression du corpus 5, ce mode de réalisation de procédé comprend en outre un taquage du corpus, typiquement en sortie de l'imprimante 3.

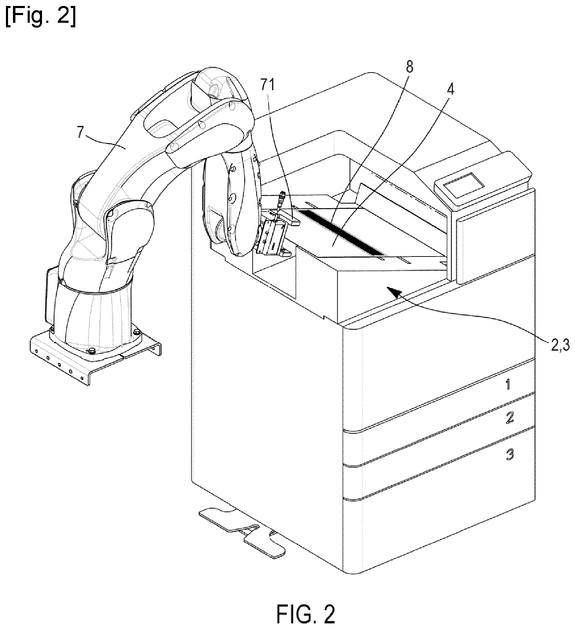

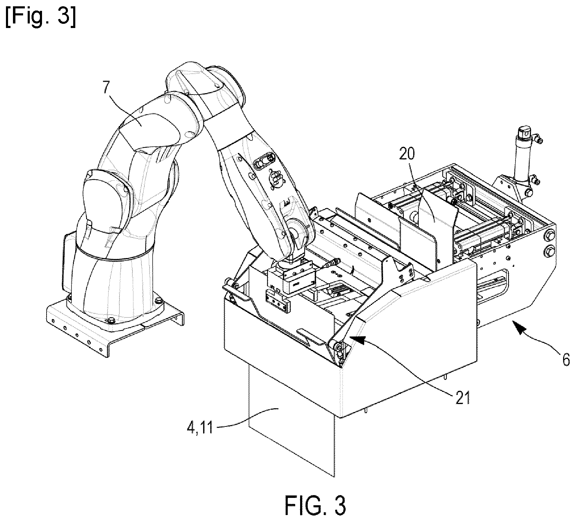

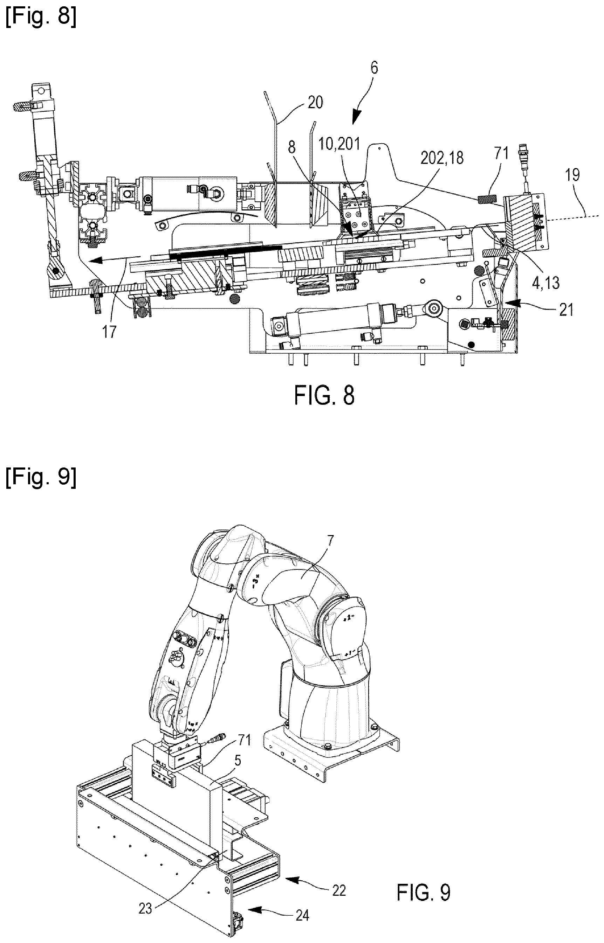

Après l'étape 99, ce mode de réalisation de procédé selon l'invention comprend aussi les étapes successives suivantes :
- étape 101 : une impression ou une réception, respectivement au poste 2 d'impression ou de réception de couverture, de la couverture 4 ; puis
- étape 102 : les moyens 7 (plus exactement le bras des moyens 7) prennent la couverture 4, comme illustré en figure 2; puis
- étape 103 : les moyens 7 (plus exactement le bras des moyens 7) transportent la couverture 4 du poste 2 d'impression ou de réception de couverture au poste de rainage 21 ; puis
- étape 104 : les moyens 7 (plus exactement le bras des moyens 7) insèrent (verticalement) la couverture 4 dans le poste de rainage 21, comme illustré en figures 3 et 4, les moyens d'acheminement 7 insérant la couverture 4 dans le poste de rainage 21 dans la position de rainage 11 ; puis
- étape 105 : un rainage (ou pré-pliage), par le poste de rainage 21, de la couverture 4 (avant le dépôt de la colle) selon plusieurs lignes de plis parallèles s'étendant sur toute une largeur ou longueur de la couverture 4 (de préférence au dos de la couverture), de préférence selon deux ou quatre lignes de plis parallèles. L'espacement entre ces lignes parallèles dépend de l'épaisseur du corpus 5, mesurée ou déterminée au préalable comme expliqué ci-dessous à l'alinéa de l'étape 110; puis
- étape 106 : les moyens 7 (plus exactement le bras des moyens 7) positionnent la couverture 4 selon la position de dépôt 12 pour laquelle la zone de collage 8 n'est pas située sous les moyens de chauffage 10, comme illustré en figure 5 ; la zone de collage 8 n'est pas située sous le réceptacle 20 de corpus du poste de reliure 6 quand la couverture 4 est dans sa position de dépôt 12 ; la position de dépôt 12 est décalée par rapport à la position de rainage 11 selon la direction de décalage 17 ; l'espace occupé par la couverture 4 dans sa position de rainage 11 intersecte l'espace occupé par la couverture 4 dans sa position de dépôt 12 ; dans sa position de rainage 11 la couverture 4 s'étend perpendiculairement ou sensiblement (i.e. à plus ou moins 20°) perpendiculairement à la couverture 4 dans sa position de dépôt 12; puis
- étape 107 : une immobilisation, par les moyens de verrouillage 18, de la couverture 4 dans la position de dépôt 12 comme illustré en figure 6, au moins jusqu'à la future étape 110 incluse de dépôt de colle; puis
- étape 108 : les moyens 7 (plus exactement le bras des moyens 7) lâchent la couverture 4 dans sa position de dépôt 12; puis
- étape 109 : une saisie, par le bras robotisé des moyens 7, du pistolet de colle 72 comme illustré en figure 7; puis
- étape 110 : un dépôt de colle, par le bras robotisé des moyens 7 tenant le pistolet 72, sur la zone de collage 8 de la couverture 4 à l'intérieur du poste de reliure 6 avant l'assemblage ou emboitage (future étape 124) par collage de la couverture 4 et du corpus 5 formant le livre 9 ; plus exactement un dépôt de la colle du pistolet 72 sur la zone de collage 8 de la couverture 4 alors que la couverture 4 est placée à plat dans le poste de reliure 6 dans sa position de dépôt 12 ; le pistolet 72 de colle comprend la réserve 73 de colle comprenant le fil de colle solide enroulé sous la forme d'une bobine, ce mode de réalisation de procédé selon l'invention comprenant un déroulement du fil de la bobine par une extrémité de ce fil et une étape dans laquelle on fond cette extrémité du fil de colle de manière à délivrer la colle sous forme liquide ou pâteuse sur la zone de collage 8 ; ce mode de réalisation de procédé selon l'invention comprend, avant ce dépôt d'une certaine quantité de colle sur la zone de collage 8 de la couverture 4 à l'intérieur du poste de reliure 6, une détermination de cette quantité de colle, cette quantité de colle étant une fonction de l'épaisseur mesurée ou déterminée du corpus 5, typiquement selon les métadonnées collectées dans un fichier PDF correspondant au corpus traduites en dépose de colle. Cette épaisseur du corpus 5 a été mesurée et/ou déterminée au préalable dans ce procédé :
   - par exemple par mesure de l'écart entre les deux doigts 71 de la pince du bras des moyens 7 tenant le corpus 5 ; et/ou
   - par exemple par mesure en sortie du poste 3 par une mesure optique ou mécanique, par exemple après ou pendant le taquage (éventuellement avec un facteur multiplicatif x2 en cas de future découpe dans le bac de récupération 26 aux étapes optionnelles 116 et 117).; et/ou
   - à partir d'une base de données et en fonction du livre 9 sélectionné par l'utilisateur, typiquement selon des métadonnées collectées dans un fichier PDF correspondant au corpus ;
   ; puis
- étape 111 : les moyens 7 (plus exactement le bras des moyens 7) lâchent le pistolet 72 de colle et le range dans son support à l'intérieur du coffrage 30, 32; puis
- étape 112 : les moyens 7 (plus exactement le bras des moyens 7) prennent la couverture 4 et les moyens 18 cessent d'immobiliser la couverture 4 ; puis
- étape 113 : les moyens d'acheminement 7 positionnent la couverture 4 selon la position de chauffe 13 pour laquelle la zone de collage 8 est située sous les moyens de chauffage 10 de sorte que la colle déposée soit située entre la couverture 4 et les moyens de chauffage 10, la position de chauffe 13 étant décalée par rapport à la position de dépôt 12 selon la direction de décalage 17 ; les moyens 18 immobilisent la couverture 4 dans sa position 13 comme illustré en figure 8, les moyens 18 se déplaçant de manière solidaire des moyens de chauffage 10 ; pendant cette étape 113 et jusqu'à l'étape 121, ce mode de réalisation de procédé selon l'invention comprend un réchauffage ou un maintien à chaud, par les moyens de chauffage 10, de la colle déposée sur la zone de collage 8 de la couverture 4 avant l'assemblage ou l'emboitage (future étape 124) par collage de la couverture 4 et du corpus 5 ; la zone de collage 8 n'est pas située sous le réceptacle 20 de corpus du poste de reliure 6 quand la couverture 4 est dans sa position de chauffe 13 ; le réchauffage ou maintien à chaud comprend :
   * une génération de chaleur par les moyens de chauffage 10 plus exactement par les moyens 201,
   * une limitation, par le bec 202, d'une étendue de diffusion de cette chaleur en direction de la zone de collage 8 dans la position de chauffe 13 de la couverture 4,
   * un réglage, par le régulateur COMM, d'une ouverture du bec 202 en fonction d'une quantité et/ou d'une largeur de colle déposée sur la zone de collage 8 et/ou en fonction d'une épaisseur (déterminée ou mesurée) du corpus 5.

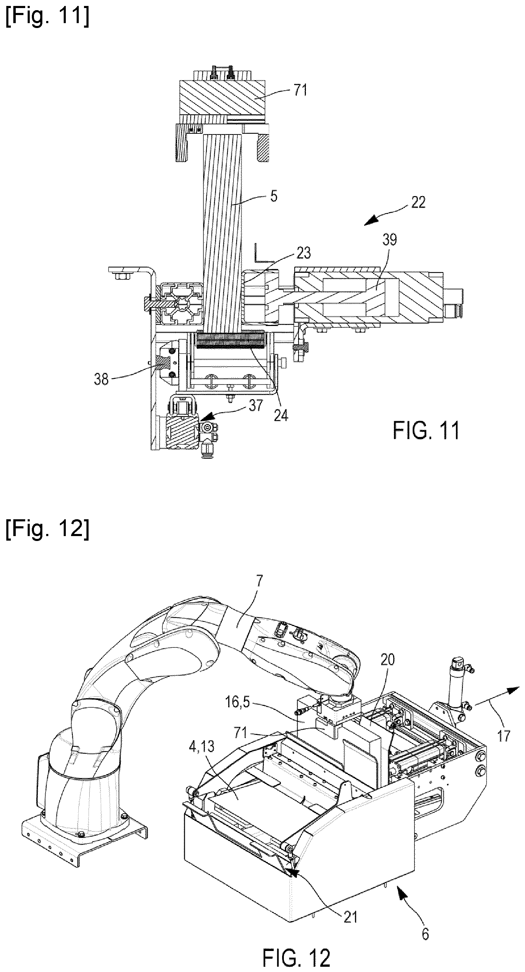

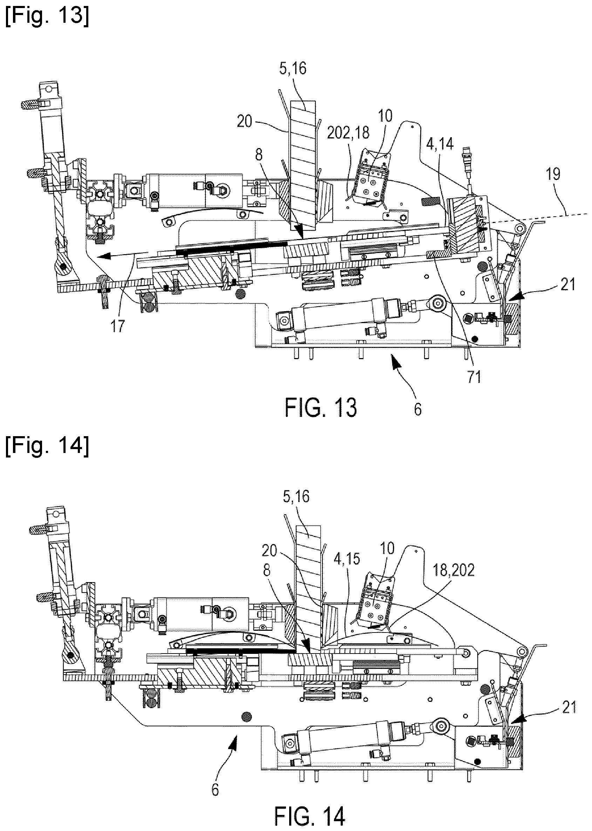

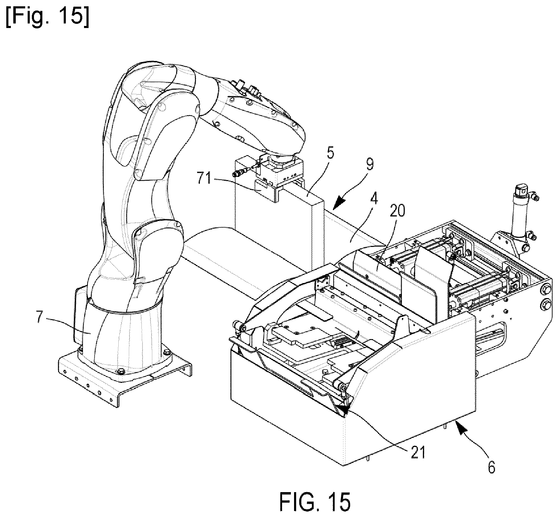

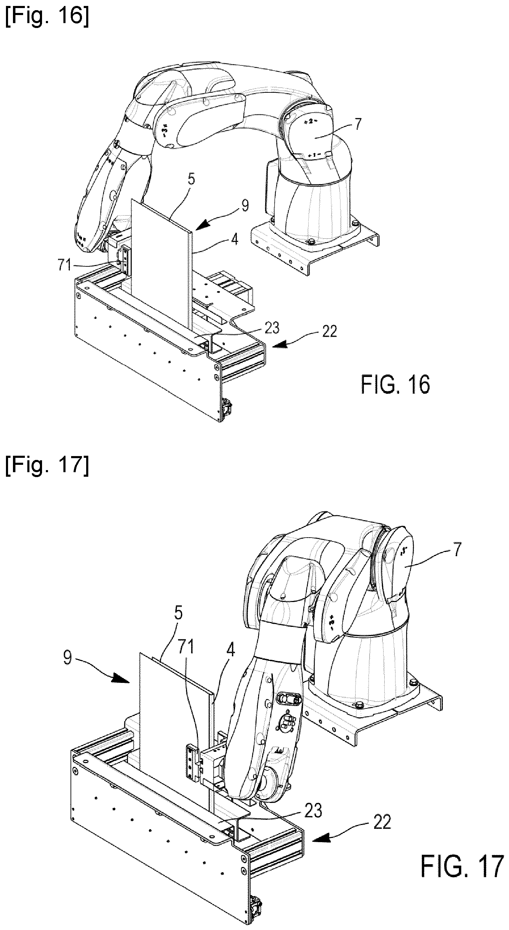

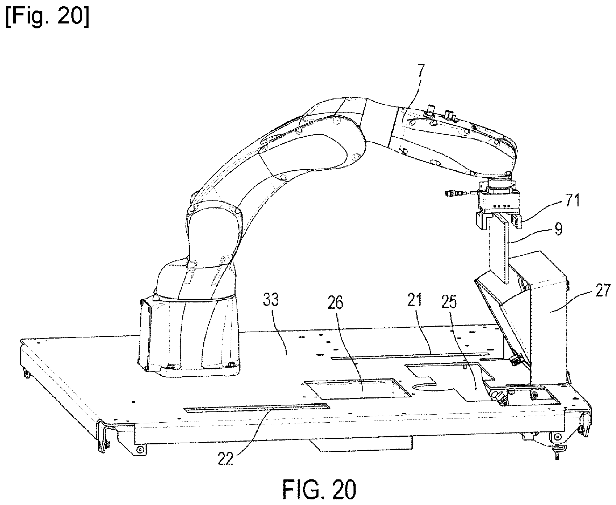

On remarque que le dispositif 1 (plus exactement les moyens 7) a déposé de la colle sur la couverture 4 de sorte que cette colle déposée soit située entre :
* d'un côté, la couverture 4 dans sa position de dépôt 12 ou la couverture 4 dans sa position de chauffage 13 ou la zone de collage 8 pour la position de chauffage 13 de la couverture 4, et
* de l'autre côté, les moyens 10 (plus précisément chacun des moyens 201 et 202).
; puis
- étape 114 : les moyens 7 (plus exactement le bras des moyens 7) lâchent la couverture 4; puis
- étape 115 : les moyens 7 (plus exactement le bras des moyens 7) prennent le corpus 5 et acheminent le corpus depuis le poste 3 d'impression ou de réception de corpus; puis
- étape 116 (optionnelle, en cas de corpus 5 dans le poste 3 en grand format pour fabriquer un livre 9 de format au moins deux fois plus petit): les moyens d'acheminement 7 (plus exactement le bras des moyens 7) acheminent le corpus 5 dans un format initial, de préférence A4, jusqu'au poste de massicotage 25, puis maintiennent le corpus 5 dans le poste de massicotage 25 pour une découpe du corpus 5 en une partie du corpus 5 maintenue dans les moyens d'acheminement 7 et une autre partie du corpus 5 découpée et dirigée (en tombant) vers le bac de récupération 26; puis
- étape 117 (optionnelle, en cas de corpus 5 dans le poste 3 en grand format pour fabriquer un livre 9 de format au moins deux fois plus petit): les moyens d'acheminement 7 (plus exactement le bras des moyens 7) assemblent dans le bac de récupération 26 les deux parties du corpus 5 de manière à former dans les moyens d'acheminement 7 un corpus 5 de format réduit, de préférence A5, mais d'épaisseur augmentée par rapport à son format initial ; puis
- étape 118 : : comme illustré sur les figures 9 à 11, les moyens 7 (plus exactement le bras des moyens 7) acheminent le corpus jusqu'au poste de grecquage 22 comprenant le réceptacle de corpus 23 ; ce réceptacle 23 immobilise le corpus 5 pendant que les moyens 24 effectuent un grecquage d'une bordure du corpus 5 lorsqu'il est disposé dans le réceptacle 23 de corpus du poste de grecquage 22; puis
- étape 119 : les moyens d'acheminement 7 (plus exactement le bras des moyens 7) acheminent le corpus 5 depuis le poste de grecquage 22 jusqu'au poste de reliure 6, plus exactement jusqu'au réceptacle 20 de corpus du poste de reliure 6 ; on a donc une réception, dans le réceptacle de corpus 20 du poste de reliure 6, du corpus 5 dans sa position de réception 16 illustrée en figure 12; puis
- étape 120 : les moyens d'acheminement 7 (plus exactement le bras des moyens 7) lâchent le corpus 5 dans le réceptacle de corpus 20 dans sa position de réception 16; puis
- étape 121 : les moyens d'acheminement 7 (plus exactement le bras des moyens 7) prennent la couverture 4 ; puis
- étape 122 : comme illustré en figure 13, les moyens d'acheminement 7 (plus exactement le bras des moyens 7) positionnent la couverture 4 selon la position de pré-assemblage 14 pour laquelle la zone de collage 8 n'est pas située sous les moyens de chauffage 10 ; la position de pré-assemblage 14 est décalée par rapport à la position de chauffe 13 selon la direction de décalage 17 ; la couverture 4 est située sur sa surface ou plaque de support dans un même plan dit plan de collage 19 pour les positions de dépôt 12, de chauffe 13 et de de pré-assemblage 14 ; la zone de collage 8 est située sous le réceptacle de corpus 20 du poste de reliure 6 quand la couverture 4 est dans sa position de pré-assemblage 14 ; dans sa position de réception 16 le corpus 5 s'étend perpendiculairement ou sensiblement (à plus ou moins 20°) perpendiculairement à la couverture 4 dans sa position de pré-assemblage 14; puis
- étape 123 : les moyens d'acheminement 7 (plus exactement le bras des moyens 7) lâchent la couverture 4 ; puis
- étape 124 : comme illustré sur la figure 14, la couverture 4 est positionnée selon sa position d'assemblage 15 (par pivotement de la surface de support de la couverture 4 en direction du réceptacle 20) ; cette position 15 est décalée par rapport à la position de pré-assemblage 14 au moins en partie perpendiculairement à la direction de décalage 17 (et au plan 19) de manière à assembler ou emboiter la couverture 4 et le corpus 5 par collage ; dans sa position de réception 16, le corpus 5 s'étend perpendiculairement ou sensiblement (à plus ou moins 20°) perpendiculairement à la couverture 4 dans sa position d'assemblage 15 ; on a alors un assemblage ou emboitage, au poste de reliure 6, du corpus 5 et de la couverture 4 par collage de la colle déposée sur la zone 8; puis
- étape 125 : les moyens d'acheminement 7 (plus exactement le bras des moyens 7) prennent le livre 9 ainsi assemblé, mais en ne touchant que le corpus 5 ; puis
- étape 126 : comme illustré en figure 15, les moyens d'acheminement 7 (plus exactement le bras des moyens 7) sortent le livre 9 du poste de reliure 6 perpendiculairement ou sensiblement (à plus ou moins 20°) perpendiculairement à la direction de décalage 17 (et parallèlement ou sensiblement (à plus ou moins 20°) parallèlement au plan 19) et en ne touchant que le corpus 5; puis
- étape 127 : les moyens d'acheminement 7 (plus exactement le bras des moyens 7) acheminent le livre assemblé 9 depuis le poste de reliure 6 et jusqu'au réceptacle de corpus 23 du poste de grecquage 22 en ne touchant que le corpus 5; puis
- étape 128 : comme illustré en figure 16, les moyens d'acheminement 7 (plus exactement le bras des moyens 7) lâchent le livre 9 dans le réceptacle 23 de corpus du poste de grecquage 22; puis
- étape 129 : comme illustré en figure 17, les moyens d'acheminement 7 (plus exactement le bras des moyens 7) changent de prise en saisissant le livre 9 par au moins une partie de la couverture 4 collée au corpus 5 alors que le livre 9 est toujours dans le réceptacle 23 de corpus du poste de grecquage 22; puis
- étape 130 : les moyens d'acheminement 7 (plus exactement le bras des moyens 7) acheminent le livre 9 depuis le poste de grecquage 22 et jusqu'au poste de massicotage 25; puis
- étape 131 : comme illustré en figure 18, un massicotage, par le poste de massicotage 25, d'un premier côté (« pied ») du livre 9; puis
- étape 132 : comme illustré en figure 19, un massicotage, par le poste de massicotage 25, d'un deuxième côté (« gouttière ») du livre 9 (le livre 9 est pivoté de 90° par rapport à la figure 18), aussi appelé « coupe latérale »; puis
- étape 133 : un massicotage, par le poste de massicotage 25, d'un troisième côté (« tête ») du livre 9 (le livre 9 est pivoté de 180° par rapport à la figure 18); puis
- étape 134 : comme illustré en figure 20, les moyens d'acheminement 7 (plus exactement le bras des moyens 7) acheminent le livre 9 depuis le poste de massicotage 25 et jusqu'au poste de sortie 27; puis
- étape 135 : les moyens d'acheminement 7 (plus exactement le bras des moyens 7) lâchent le livre 9 dans le poste de sortie 27. Un moyen de sécurité du dispositif selon l'invention déverrouille la trappe du poste 27 pour que le client ouvre la trappe en toute sécurité et puisse attraper le livre 9 depuis l'extérieur du dispositif.

Selon des variantes considérées de ce mode de réalisation de procédé selon l'invention, chacune des étapes du bloc des étapes 100 et 115 à 119 peut être mis en œuvre avant, après, de manière simultanée ou de manière alternée avec chacune des étapes du bloc des étapes 101 à 114.

En référence à la description des modes de réalisation de dispositif et procédé selon l'invention :
- au niveau du poste 2 d'impression ou de réception de couverture, la couverture 4 a typiquement un format SRA3 ou SRA4 selon la norme ISO 217 (ICS no 85.060),
- au niveau du poste 3 d'impression ou de réception de corpus, le corpus 5 a typiquement un format A4 ou A5 selon la norme ISO 216 (ICS no 85.080.10).

Typiquement:
- au niveau du poste 2, la couverture 4 a le format SRA3, et au niveau du poste 3 le corpus 5 a le format :
   o A4, sans être découpé (selon les étapes 116 et 117) de manière à ce que le corpus 5 conserve son format A4 jusqu'à assemblage avec la couverture 4, ou
   o A5, sans être découpé (selon les étapes 116 et 117) de manière à ce que le corpus 5 conserve son format A5 jusqu'à assemblage avec la couverture 4 (ce qui implique une plus grande surface de couverture éliminée lors du massicotage 130, 131, 132, 133 du livre que dans le cas précédent), ou
   o A4, en étant ensuite découpé (selon les étapes 116 et 117) de manière à ce que le corpus 5 possède un format A5 lors de son assemblage avec la couverture 4 , ou
- au niveau du poste 2, la couverture 4 a le format SRA4, et au niveau du poste 3 le corpus 5 a le format :
   ∘ A5, sans être découpé (selon les étapes 116 et 117) de manière à ce que le corpus 5 conserve son format A5 jusqu'à assemblage avec la couverture 4, ou
   ∘ A4, en étant ensuite découpé (selon les étapes 116 et 117) de manière à ce que le corpus 5 possède un format A5 lors de son assemblage avec la couverture 4.

Bien sûr, l'invention n'est pas limitée aux exemples qui viennent d'être décrits et de nombreux aménagements peuvent être apportés à ces exemples sans sortir du cadre de l'invention.

Dans des variantes combinables entre elles :
- tout ou partie des étapes 100 et 115 à 119 sont réalisées avant l'étape 110, voir même avant l'étape 101, et/ou c'est les moyens 7 qui en saisissant le corpus 5 mesurent l'épaisseur de ce corpus 5 pour la détermination de la quantité de colle à déposer sur la zone de collage 8 de la couverture 4 ; et/ou
- la colle peut ne pas être déposée par le bras des moyens 7 mais par un autre bras robotique ou un autre moyen technique dédié au dépôt de colle (alternative non revendiquée), cet autre bras ou moyen technique étant:
   ∘ mobile par rapport au coffrage 30 de manière à déposer la colle en plusieurs endroits de la zone de collage 8, ou
   ∘ immobile par rapport au coffrage 30, la couverture 4 étant bougée par le bras des moyens 7 de manière à déposer la colle en plusieurs endroits de la zone de collage 8.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Dispositif de fabrication (1) d'un livre à la demande, comprenant :
- un poste d'impression ou de réception de couverture (2) agencé pour respectivement imprimer ou recevoir une couverture (4),
- un poste d'impression ou de réception de corpus (3) agencé pour respectivement imprimer ou recevoir un corpus (5),
- un poste de reliure (6) agencé pour assembler le corpus et la couverture,
- des moyens d'acheminement (7) agencés et/ou programmés pour acheminer la couverture et/ou le corpus entre les différents postes, les moyens d'acheminement comprenant un bras robotisé muni de doigts (71) agencés et/ou programmés pour manipuler la couverture et/ou le corpus, **caractérisé en ce que** le dispositif est agencé pour déposer de la colle sur une zone de collage (8) de la couverture à l'intérieur du poste de reliure avant un assemblage par collage de la couverture et du corpus formant un livre (9), le dispositif comprenant un pistolet de colle (72), le bras robotisé étant agencé et/ou programmé pour saisir le pistolet de colle pour déposer de la colle sur la zone de collage de la couverture alors que la couverture est placée dans le poste de reliure.

2. Dispositif selon la revendication 1, **caractérisé en ce que** le pistolet de colle comprend :
- une réserve (73) de colle comprenant un fil de colle solide enroulé sous la forme d'une bobine,
- des moyens pour dérouler le fil de la bobine par une extrémité de ce fil et pour faire fondre cette extrémité du fil de colle de manière à délivrer la colle sous forme liquide ou pâteuse.

3. Dispositif selon l'une quelconque des revendications précédentes, **caractérisé en ce qu'**il comprend des moyens pour mesurer ou déterminer une épaisseur du corpus, le dispositif étant agencé et/ou programmé pour déterminer puis déposer une quantité de colle sur la zone de collage de la couverture à l'intérieur du poste de reliure, cette quantité de colle étant une fonction de l'épaisseur mesurée ou déterminée du corpus.

4. Dispositif selon l'une quelconque des revendications précédentes, **caractérisé en ce qu'**il comprend des moyens de chauffage (10) agencés pour réchauffer et/ou maintenir à chaud de la colle déposée sur la zone de collage de la couverture avant l'assemblage par collage de la couverture et du corpus, les moyens de chauffage comprenant :
- des moyens (201) pour générer de la chaleur,
- un bec (202) agencé pour limiter une étendue de diffusion de cette chaleur ,
- un régulateur agencé et/ou programmé pour régler une ouverture du bec en fonction d'une quantité et/ou d'une largeur de colle déposée sur la zone de collage et/ou en fonction d'une épaisseur du corpus
le bras robotisé étant agencé et/ou programmé pour positionner la couverture selon plusieurs positions comprenant :
- une position de dépôt (12) pour laquelle la zone de collage n'est pas située sous les moyens de chauffage et pour laquelle le dispositif est agencé pour déposer la colle sur la zone de collage,
- une position de chauffe (13) pour laquelle la zone de collage est située sous les moyens de chauffage,
- une position de pré-assemblage (14) pour laquelle la zone de collage n'est pas située sous les moyens de chauffage la position de chauffe étant décalée par rapport à la position de dépôt selon une direction de décalage (17) et la position de pré-assemblage étant décalée par rapport à la position de chauffe selon cette direction de décalage.

5. Dispositif selon la revendication 4, **caractérisé en ce que** le poste de reliure comprend un réceptacle de corpus (20) agencé pour recevoir le corpus dans une position de réception (16), le bras robotisé étant agencé et/ou programmé pour que dans la position de dépôt la zone de collage ne soit pas située sous le réceptacle de corpus du poste de reliure et pour que dans la position de pré-assemblage la zone de collage soit située sous le réceptacle de corpus du poste de reliure.

6. Dispositif selon l'une quelconque des revendications 4 ou 5, **caractérisé en ce que** le bras robotisé est agencé et/ou programmé pour sortir le livre du poste de reliure perpendiculairement ou sensiblement perpendiculairement à la direction de décalage et en ne touchant que le corpus.

7. Dispositif selon l'une quelconque des revendications précédentes, **caractérisé en ce qu'**il comprend un poste de rainage (21) agencé pour rainer la couverture selon plusieurs lignes parallèles s'étendant sur toute une largeur ou longueur de la couverture, de préférence selon deux ou quatre lignes parallèles, le bras robotisé étant agencé et/ou programmé pour insérer la couverture dans le poste de rainage dans une position de rainage (11).

8. Dispositif selon l'une quelconque des revendications précédentes, **caractérisé en ce qu'**il comprend un poste de grecquage (22), le bras robotisé étant agencé et/ou programmé pour acheminer le corpus depuis le poste d'impression ou de réception de corpus et jusqu'au poste de grecquage et depuis le poste de grecquage jusqu'au poste de reliure, le poste de grecquage comprenant un réceptacle de corpus (23) et des moyens (24) pour grecquer une bordure du corpus lorsqu'il est disposé dans le réceptacle de corpus du poste de grecquage.

9. Dispositif selon la revendication précédente, **caractérisé en ce que** le bras robotisé est agencé et/ou programmé :
- pour acheminer le livre assemblé depuis le poste de reliure et jusqu'au réceptacle de corpus du poste de grecquage en ne touchant que le corpus,
- puis pour lâcher le livre dans le réceptacle de corpus du poste de grecquage,
- puis pour changer de prise en saisissant le livre par au moins une partie de la couverture collée au corpus.

10. Dispositif selon l'une quelconque des revendications précédentes, **caractérisé en ce qu'**il comprend un poste de massicotage (25) agencé pour massicoter le livre.

11. Dispositif selon la revendication précédente, **caractérisé en ce que** le poste de massicotage est relié à un bac de récupération (26), le bras robotisé étant agencé et/ou programmé pour acheminer le corpus dans un format initial jusqu'au poste de massicotage, puis maintenir le corpus dans le poste de massicotage pour une découpe en une partie du corpus maintenue dans les moyens d'acheminement et une autre partie du corpus découpée et dirigée vers le bac de récupération, puis assembler les deux parties du corpus de manière à former dans les moyens d'acheminement un corpus de format réduit mais d'épaisseur augmentée par rapport à son format initial.

12. Dispositif selon l'une quelconque des revendications précédentes considérée comme dépendante de la revendication 7 et de la revendication 8 ou 9 et de la revendication 10 ou 11, **caractérisé en ce qu'**il comprend un coffrage (30) renfermant l'ensemble des postes, ledit coffrage (30) comprenant une partie inférieure (31) opaque et une partie supérieure (32) munie d'une vitrine transparente, la partie inférieure et la partie supérieure étant séparées par une plaque de séparation (33) opaque, ledit dispositif étant **caractérisé en outre en ce que** :
- le bras robotisé est situé au moins en partie dans la partie supérieure,
- le poste de reliure est situé au moins en partie dans la partie supérieure,
- le poste de rainage est situé au moins en partie dans la partie supérieure,
- le poste de grecquage est situé au moins en partie dans la partie inférieure et est accessible à partir de la partie supérieure à travers une fente réalisée dans la plaque de séparation
- le poste de massicotage est situé au moins en partie dans la partie inférieure et est accessible à partir de la partie supérieure à travers une fente réalisée dans la plaque de séparation
- le poste d'impression ou de réception de couverture est situé au moins en partie dans la partie supérieure.

13. Procédé de fabrication d'un livre à la demande, comprenant :
- une impression ou une réception, respectivement à un poste d'impression ou de réception de couverture (2), d'une couverture (4),
- une impression ou une réception, respectivement à un poste d'impression ou de réception de corpus (3), d'un corpus (5),
- un assemblage, à un poste de reliure (6), du corpus et de la couverture,
- un acheminement, par des moyens d'acheminement (7), de la couverture et/ou du corpus entre les différents postes, ledit procédé étant **caractérisé en ce que** les moyens d'acheminement comprennent un bras robotisé muni de doigts manipulant la couverture et/ou le corpus pour l'acheminer entre les différents postes
le procédé étant **caractérisé en ce qu'**il comprend un dépôt de colle sur une zone de collage (8) de la couverture à l'intérieur du poste de reliure avant un assemblage par collage de la couverture et du corpus formant un livre (9),
le procédé comprenant une saisie, par le bras robotisé, d'un pistolet de colle (72) de manière à déposer la colle de ce pistolet sur la zone de collage de la couverture alors que la couverture est placée dans le poste de reliure.

## Patentansprüche

1. Vorrichtung (1) zum Herstellen eines Buchs auf Bestellung, umfassend:
- eine Umschlagsdruck- oder -empfangsstation (2), die zum Drucken bzw. Empfangen eines Umschlags (4) angeordnet ist,
- eine Buchblockdruck- oder -empfangsstation (3), die zum Drucken bzw. Empfangen eines Buchblocks (5) angeordnet ist,
- eine Bindestation (6), die zum Zusammenfügen des Buchblocks und des Umschlags angeordnet ist,
- Beförderungsmittel (7), die zum Befördern des Umschlags und/oder des Buchblocks zwischen den verschiedenen Stationen angeordnet und/oder programmiert sind, wobei die Beförderungsmittel einen Roboterarm mit Fingern umfassen (71), die zum Handhaben des Umschlags und/oder des Buchblocks angeordnet und/oder programmiert sind, **dadurch gekennzeichnet, dass** die Vorrichtung zum Auftragen von Klebstoff auf einen Klebebereich (8) des Umschlags innerhalb der Bindestation vor dem Zusammenkleben des Umschlags und des Buchblocks zu einem Buch (9) angeordnet ist, wobei die Vorrichtung eine Klebepistole (72) umfasst, wobei der Roboterarm zum Greifen der Klebepistole angeordnet und/oder programmiert ist, um Klebstoff auf den Klebebereich des Umschlags aufzutragen, während sich der Umschlag in der Bindestation befindet.

2. Vorrichtung nach Anspruch 1, **dadurch gekennzeichnet, dass** die Klebepistole umfasst:
- einen Klebstoffvorrat (73), umfassend einen festen Klebstofffaden, der in Form einer Spule aufgewickelt ist,
- Mittel zum Abwickeln des Fadens von der Spule an einem Ende dieses Fadens und zum Schmelzen dieses Endes des Klebefadens, um den Klebstoff in flüssiger oder pastöser Form aufzutragen.

3. Vorrichtung nach einem der vorstehenden Ansprüche, **dadurch gekennzeichnet, dass** sie Mittel zum Messen oder Bestimmen einer Dicke des Buchblocks umfasst, wobei die Vorrichtung angeordnet und/oder programmiert ist, um eine Klebstoffmenge zu bestimmen und anschließend auf den Klebebereich des Umschlags innerhalb der Bindestation aufzutragen, wobei diese Klebstoffmenge abhängig von der gemessenen oder bestimmten Dicke des Buchblocks ist.

4. Vorrichtung nach einem der vorstehenden Ansprüche, **dadurch gekennzeichnet, dass** sie Heizmittel (10) umfasst, die angeordnet sind, um den auf den Klebebereich des Umschlags aufgetragenen Klebstoff vor dem Zusammenkleben des Umschlags und des Buchblocks zu erwärmen und/oder warm zu halten, wobei die Heizmittel umfassen:
- Mittel (201) zum Erzeugen von Wärme,
- eine Nase (202), die zum Begrenzen einer Ausbreitung dieser Wärmestrahlung angeordnet ist,
- einen Regler, der angeordnet und/oder programmiert ist, um eine Öffnung der Nase in Abhängigkeit von einer auf den Klebebereich aufgetragenen Klebstoffmenge und/oder -breite und/oder in Abhängigkeit von einer Dicke des Buchblocks zu regulieren, wobei der Roboterarm angeordnet und/oder programmiert ist, um den Umschlag in mehreren Positionen zu positionieren, umfassend:
- eine Auftragsposition (12), bei der der Klebebereich nicht unter den Heizmitteln liegt und bei der die Vorrichtung zum Auftragen des Klebstoffs auf den Klebebereich angeordnet ist,
- eine Heizposition (13), bei der der Klebebereich unter den Heizmitteln liegt,
- eine Vormontageposition (14), bei der der Klebebereich nicht unter den Heizmitteln liegt, wobei die Heizposition gegenüber der Auftragsposition in einer Versatzrichtung (17) versetzt ist und die Vormontageposition gegenüber der Heizposition in dieser Versatzrichtung versetzt ist.

5. Vorrichtung nach Anspruch 4, **dadurch gekennzeichnet, dass** die Bindestation einen Buchblockbehälter (20) umfasst, der zum Aufnehmen des Buchblocks in einer Aufnahmeposition (16) angeordnet ist, wobei der Roboterarm so angeordnet und/oder programmiert ist, dass der Klebebereich in der Auftragsposition nicht unter dem Buchblockbehälter der Bindestation liegt und dass der Klebebereich in der Vormontageposition unter dem Buchblockbehälter der Bindestation liegt.

6. Vorrichtung nach einem der Ansprüche 4 oder 5, **dadurch gekennzeichnet, dass** der Roboterarm angeordnet und/oder programmiert ist, um das Buch senkrecht oder im Wesentlichen senkrecht zur Versatzrichtung und nur den Buchblock berührend aus der Bindestation zu entnehmen.

7. Vorrichtung nach einem der vorstehenden Ansprüche, **dadurch gekennzeichnet, dass** sie eine Falzstation (21) umfasst, die angeordnet ist, um den Umschlag entlang mehrerer paralleler Linien zu falzen, die sich über die gesamte Breite oder Länge des Umschlags erstrecken, vorzugsweise entlang zwei oder vier parallelen Linien, wobei der Roboterarm angeordnet und/oder programmiert ist, um den Umschlag in einer Falzposition (11) in die Falzstation einzuführen.

8. Vorrichtung nach einem der vorstehenden Ansprüche, **dadurch gekennzeichnet, dass** sie eine Aufrauhstation (22) umfasst, wobei der Roboterarm angeordnet und/oder programmiert ist, um den Buchblock von der Buchblockdruck- oder -empfangsstation zur Aufrauhstation und von der Aufrauhstation zur Bindestation zu befördern, wobei die Aufrauhstation einen Buchblockbehälter (23) und Mittel (24) zum Aufrauhen eines Randes des Buchblocks umfasst, wenn er im Buchblockbehälter der Aufrauhstation angeordnet ist.

9. Vorrichtung nach dem vorstehenden Anspruch, **dadurch gekennzeichnet, dass** der Roboterarm angeordnet und/oder programmiert ist:
- um das gebundene Buch von der Bindestation zum Buchblockbehälter der Aufrauhstation und nur den Buchblock berührend zu befördern,
- dann, um das Buch in den Buchblockbehälter der Aufrauhstation abzulegen,
- dann, um den Griff zu wechseln, indem das Buch an mindestens einem Teil des Umschlags, der am Buchblock klebt, ergriffen wird.

10. Vorrichtung nach einem der vorstehenden Ansprüche, **dadurch gekennzeichnet, dass** sie eine Schneidestation (25) umfasst, die zum Schneiden des Buchs angeordnet ist.

11. Vorrichtung nach dem vorstehenden Anspruch, **dadurch gekennzeichnet, dass** die Schneidestation mit einem Auffangbehältnis (26) verbunden ist, wobei der Roboterarm angeordnet und/oder programmiert ist, um den Buchblock in einem Anfangsformat zur Schneidestation zu befördern, und ihn dann in der Schneidestation zu halten, um einen Teil des in den Beförderungsmitteln gehaltenen Buchblock zu schneiden und einen anderen Teil des Buchblocks zu schneiden und zum Auffangbehältnis zu leiten, und anschließend die beiden Teile des Buchblocks zusammenzufügen, sodass in den Beförderungsmitteln ein Buchblock mit reduziertem Format, aber im Vergleich zu seinem Anfangsformat erhöhter Dicke gebildet wird.

12. Vorrichtung gemäß einem der vorstehenden Ansprüche, der als abhängig von Anspruch 7 und Anspruch 8 oder 9 und Anspruch 10 oder 11 angesehen wird, **dadurch gekennzeichnet, dass** sie eine Schalung (30) umfasst, die alle Stationen umschließt, wobei die Schalung (30) einen undurchsichtigen unteren Teil (31) und einen oberen Teil (32) mit einer transparenten Vitrine umfasst, wobei der untere Teil und der obere Teil durch eine undurchsichtige Trennplatte (33) voneinander getrennt sind, wobei die Vorrichtung ferner **dadurch gekennzeichnet ist, dass:**
- der Roboterarm mindestens teilweise im oberen Teil liegt,
- die Bindestation mindestens teilweise im oberen Teil liegt,
- die Falzstation mindestens teilweise im oberen Teil liegt,
- die Aufrauhstation mindestens teilweise im unteren Teil liegt und vom oberen Teil aus durch einen Schlitz in der Trennplatte zugänglich ist
- die Schneidestation mindestens teilweise im unteren Teil liegt und vom oberen Teil aus durch einen Schlitz in der Trennplatte zugänglich ist
- die Umschlagsdruck- und -empfangsstation mindestens teilweise im oberen Teil liegt.

13. Vorrichtung zum Herstellen eines Buchs auf Bestellung, umfassend:
- ein Drucken oder Empfangen, jeweils an einer Umschlagsdruck- oder -empfangsstation (2), eines Umschlags (4),
- ein Drucken oder Empfangen, jeweils an einer Buchblockdruck- oder -empfangsstation (3), eines Buchblocks (5),
- ein Zusammenfügen des Buchblocks und des Umschlags an einer Bindestation (6),
- ein Befördern des Umschlags und/oder des Buchblocks zwischen den verschiedenen Stationen mittels Beförderungsmitteln (7), wobei das Verfahren **dadurch gekennzeichnet ist, dass** die Beförderungsmittel einen Roboterarm mit Fingern umfassen, die den Umschlag und/oder den Buchblock handhaben, um ihn zwischen den verschiedenen Stationen zu befördern, wobei das Verfahren **dadurch gekennzeichnet ist, dass** es das Auftragen von Klebstoff auf einen Klebstoffbereich (8) des Umschlags innerhalb der Bindestation vor dem Zusammenkleben des Umschlags und des Buchblocks zu einem Buch (9) umfasst, wobei das Verfahren das Greifen einer Klebepistole (72) durch den Roboterarm umfasst, um den Klebstoff dieser Pistole auf den Klebebereich des Umschlags aufzutragen, während sich der Umschlag in der Bindestation befindet.

## Claims

1. Device for manufacturing (1) a book on demand, comprising:
- a cover printing or receiving station (2) arranged to respectively print or receive a cover (4),
- a book block printing or receiving station (3) arranged to respectively print or receive a book block (5),
- a binding station (6) arranged to assemble the book block and the cover,
- transport means (7) arranged and/or programmed to transport the cover and/or the book block between the different stations,
the transport means comprising a robotic arm equipped with digits (71) arranged and/or programmed to manipulate the cover and/or the book block
**characterized in that** said device is arranged to deposit adhesive on an adhesive bonding area (8) of the cover inside the binding station before assembly of the cover and the book block by adhesion, forming a book (9), the device comprising an adhesive applicator gun (72), the robotic arm being arranged and/or programmed to grip the adhesive applicator gun to deposit adhesive on the adhesive bonding area of the cover when the cover is placed in the binding station.

2. Device according to claim 1, **characterized in that** the adhesive applicator gun comprises:
- an adhesive reserve (73) comprising a thread of solid adhesive wound in the form of a coil,
- means for unwinding the thread from the coil by an end of this thread and for melting this end of the adhesive thread so as to deliver the adhesive in a liquid or paste form.

3. Device according to any one of the previous claims, **characterized in that** it comprises means for measuring or determining a thickness of the book block , the device being arranged and/or programmed to determine then deposit a quantity of adhesive on the adhesive bonding area of the cover inside the binding station, this quantity of adhesive being a function of the measured or determined thickness of the book block.

4. Device according to any one of the previous claims , **characterized in that** the device comprises heating means (10) arranged to heat and/or maintain at a heated temperature adhesive deposited on the adhesive bonding area of the cover before assembly of the cover and the book block by adhesion, the heating means comprising:
- means (201) for generating heat,
- a mouth (202) arranged to limit the extent of the diffusion of this heat,
- a controller arranged and/or programmed to control an opening of the mouth as a function of a quantity and/or a width of adhesive deposited on the adhesive bonding area and/or as a function of a thickness of the book block
the robotic arm being arranged and/or programmed to position the cover in several positions comprising:
- a deposition position (12) in which the adhesive bonding area is not located under the heating means and in which the device is arranged to deposit the adhesive on the adhesive bonding area,
- a heating position (13) in which the adhesive bonding area is located under the heating means,
- a pre-assembly position (14) in which the adhesive bonding area is not located under the heating means, the heating position being offset with respect to the deposition position in an offset direction (17) and the pre-assembly position being offset with respect to the heating position in this offset direction.

5. Device according to claim 4, **characterized in that** the binding station comprises a book block container (20) arranged to receive the book block in a receiving position (16), the robotic arm being arranged and/or programmed so that in the deposition position the adhesive bonding area is not located under the book block container of the binding station and so that in the pre-assembly position the adhesive bonding area is located under the book block container of the binding station.

6. Device according to claim 4 or 5, **characterized in that** robotic arm is arranged and/or programmed to remove the book from the binding station perpendicularly or substantially perpendicularly to the offset direction and touching only the book block.

7. Device according to any one of the previous claims, **characterized in that** it comprises a creasing station (21) arranged to crease the cover along several parallel lines extending over the entire width or length of the cover, preferably along two or four parallel lines, the robotic arm being arranged and/or programmed to insert the cover in the creasing station in a creasing position (11).

8. Device according to any one of the previous claims, **characterized in that** it comprises a notch binding station (22), the robotic arm being arranged and/or programmed to transport the book block from the book block printing or receiving station and up to the notch binding station and from the notch binding station up to the binding station, the notch binding station comprising a book block container (23) and means (24) for notch binding an edge of the book block when it is arranged in the book block container of the notch binding station.

9. Device according to the previous claim, **characterized in that** the robotic arm is arranged and/or programmed to:
- transport the assembled book from the binding station and up to the book block container of the notch binding station touching only the book block,
- then drop the book in the book block container of the notch binding station,
- then change grip by gripping the book by at least a part of the cover adhesively bonded to the book block.

10. Device according to any one of the previous claims, **characterized in that** it comprises a trimming station (25) arranged to trim the book.

11. Device according to the previous claim, **characterized in that** the trimming station is linked to a catch tray (26), the robotic arm being arranged and/or programmed to transport the book block in an initial format up to the trimming station, then hold the book block in the trimming station for cutting into one part of the book block held in the robotic arm and another part of the book block cut and directed towards the catch tray, then assemble the two parts of the book block so as to form in the robotic arm a book block having a reduced format, but having an increased thickness in comparison with its initial format.

12. Device according to any one of the preceding claims considered as dependent on claim 7 and on claim 8 or 9 and on claim 10 or 11, **characterized in that** it comprises a casing (30) enclosing all of the stations, said casing (30) comprising a lower part (31) that is opaque and an upper part (32) equipped with a transparent window, the lower part and the upper part being separated by a separator plate (33) that is opaque, said device being characterized moreover **in that**:
- the robotic arm is located at least partly in the upper part,
- the binding station is located at least partly in the upper part,
- the creasing station is located at least partly in the upper part,
- the notch binding station is located at least partly in the lower part and is accessible from the upper part through a slot made in the separator plate
- the trimming station is located at least partly in the lower part and is accessible from the upper part through a slot made in the separator plate
- the cover printing or receiving station is located at least partly in the upper part.

13. Method for manufacturing a book on demand, comprising:
- printing or receiving, respectively at a cover printing or receiving station (2), a cover (4),
- printing or receiving, respectively at a book block printing or receiving station (3), a book block (5),
- assembling, at a binding station (6), the book block and the cover,
- transporting, by transport means (7), the cover and/or the book block between the different stations,
the method being **characterized in that** the transport means comprise a robotic arm equipped with digits manipulating the cover and/or the book block for transporting between the different stations
the method being **characterized in that** it comprises depositing adhesive on an adhesive bonding area (8) of the cover inside the binding station before assembly of the cover and the book block by adhesion, forming a book (9) the method comprising gripping, by means of the robotic arm, an adhesive applicator gun (72) so as to deposit the adhesive from this applicator gun on the adhesive bonding area of the cover while the cover is placed in the binding station.
